# EUROPEAN PATENT SPECIFICATION

(11) **EP 1 238 691 B1**
(45) Date of publication and mention of the grant of the patent: **17.12.2008**
(21) Application number: 02005251.0
(22) Date of filing: 08.03.2002
(51) Int. Cl.: A63F 13/12

(54) **Data delivery system and data delivery method for family game machine**
Datenbereitstellungssystem und Datenbereitstellungsverfahren für Heimspielvorrichtung
Système et méthode de mise à disposition de données pour machine de jeu familiale

(30) Priority: 09.03.2001 JP 2001067027
(43) Date of publication of application: 11.09.2002
(73) Proprietor: Konami Digital Entertainment Co., Ltd., Tokyo 107-8324 (JP)
(72) Inventor: Namba, Kazuhiro, Konami Comput.Entert. Osaka, Inc., Osaka-shi, Osaka (JP); Yamaoka, Masatoshi, Konami Comput.Enter.Osaka,Inc., Osaka-shi, Osaka (JP); Goto, Katsuhiro, Konami Comput.Enter.Osaka,Inc., Osaka-shi, Osaka (JP); Yotsugi, Hirotomo, Konami Comput.Enter.Osaka,Inc., Osaka-shi, Osaka (JP)
(74) Representative: Müller-Boré & Partner Patentanwälte

(56) References cited:
- EP-A- 0 990 460
- WO-A-00/06273
- US-A- 5 051 822
- US-A- 5 846 132
- PATENT ABSTRACTS OF JAPAN vol. 1997, no. 02, 28 February 1997 (1997-02-28) -& JP 08 280934 A (TAITO CORP), 29 October 1996 (1996-10-29)

## Description

### BACKGROUND OF THE INVENTION

### 1. Field of the Invention

The present invention pertains to a data delivery system and data delivery method for a family game machine (console game), in which data is delivered via a network from a server that stores various types of data to a family game machine.

### 2. Description of the Related Art

In some conventional baseball games and the like, a heightened sense of realism is created by having player game characters appear that are assigned the same abilities and skills as real existing players. For example, user's enjoyment of a game is increased by having information such as a real professional baseball player's batting average or earned-run average, which fluctuate in accordance with the on-field performance of the baseball player, be reflected in the action in games in which the player character appears. In this type of baseball game, information pertaining to real players is added each time a new version of the game software is released, and by buying a new version of the game software, the user can enjoy a baseball game that reflects the latest player information.

However, when player information is added to the game software in the manner described above, the player information that can be reflected in the game is old information regarding the player's performance from the previous season, for example, and it is difficult to reflect in the game action on a real-time basis player information that fluctuates daily in accordance with actual game results.

JP 08 280934 A discloses a communication type game system, according to which automatic update and correction is carried out. When a CD-ROM is set on a terminal to select a game desired to be used, the terminal accesses a host computer automatically. Then, an identification code is sent out to the terminal while an application data stored in an application data RAM is transferred to the host computer to reset a recording. Additionally, the host computer specifies the terminal to check the paying state while the application data is stocked into a correction data managing device. Further, a correction data is called up from the correction data managing system to be sent to the terminal while the correction data is recorded into a correction data memory.

US-A-5 846 132 discloses an interactive apparatus and method allowing participants to compete in an interactive game based on an event which is occurring in real time or in a simulated rotisserie type game. Selection and trading of players are used to optimize performance of a team. Team performance is used to place each participant into a league with at least one of a national, regional, state, local and city/town competition in real time. A ticker tape or other visual display or audio broadcast or the like is shown or broadcast on a device of an interactive apparatus with real time score values indicative of the players' performance in the event. Using the interactive apparatus, the participants select and trade members on the team using a menu displayed or broadcast on the interactive device. The menu provides relevant information regarding the performance of the participant's team, and allows the participant to select and trade members on the participant's team with members listed in a contest roster database while the event is occurring in real time.

EP-A-0 784 258 B1 discloses a method of managing software by transmitted data on a network between a host computer and one or more personal computers, comprising the steps of loading software into a personal computer, the software including a main program, a communication program for transmitting data on the network between the host computer and the personal computer, and a time managing program for managing the usable time of the main program; requesting usable time data and a key code for operating the main program from the personal computer to the host computer by employing the communication program; receiving the key code and the usable time data by employing the communication program; operating the main program within the usable time by using the key code; and managing the usable time of the main program by employing the time managing program.

### SUMMARY OF THE INVENTION

In view of the above problems of the prior art technologies, an object of the present invention is to provide a data delivery system and data delivery method whereby information regarding game characters appearing in the game or other information can be quickly reflected in game play by delivering data from a server to a family game machine over a network.

In order to achieve the above object, the invention relates to a data delivery system that comprises a server having storage means for storing various types of data and delivers prescribed data to a family game machine via a network, wherein the server comprises delivery authorization determination means that, when a request for data delivery is received from said family game machine, determines whether or not the family game machine is authorized to receive data delivery wherein the determination performed by said delivery authorization determination means regarding whether or not data delivery is authorized is performed based on both an ID number received from said family game machine, said ID number being an ID number unique to a readable recording medium that stores data necessary for communication between said family game machine and said server, and an ID number unique to the family game machine also received from said family game machine, and data delivery means that delivers data to the family game machine based on an instruction from the delivery authorization determination means, wherin the data delivered from the server is information partaining to game characters appearing in the game.

With the above construction, because the person carrying out data delivery on the server side can identify users for whom data delivery is authorized and data such as information related to the game characters can be easily provided to the users, new information regarding game characters or other information can be quickly provided to the family game machine.

These and other objects, features, and advantages of the present invention will become more apparent upon reading the following detailed description along with the accompanied drawings.

### BRIEF DESCRIPTION OF THE DRAWINGS

Fig. 1 is an overall construction diagram of a data delivery system for family game machine pertaining to the present invention;
Fig. 2 is a drawing showing a key disk used in this data delivery system and a package in which the key disk is contained;
Fig. 3 is a flow chart showing the routine executed when the data delivery of this data delivery system is performed;
Fig. 4 is a flow chart showing a second embodiment of the routine executed when the data delivery of this data delivery system is performed; and
Fig. 5 is a flow chart showing a third embodiment of the routine executed when the data delivery of this data delivery system is performed.

### DESCRIPTION OF THE PREFERRED EMBODIMENTS

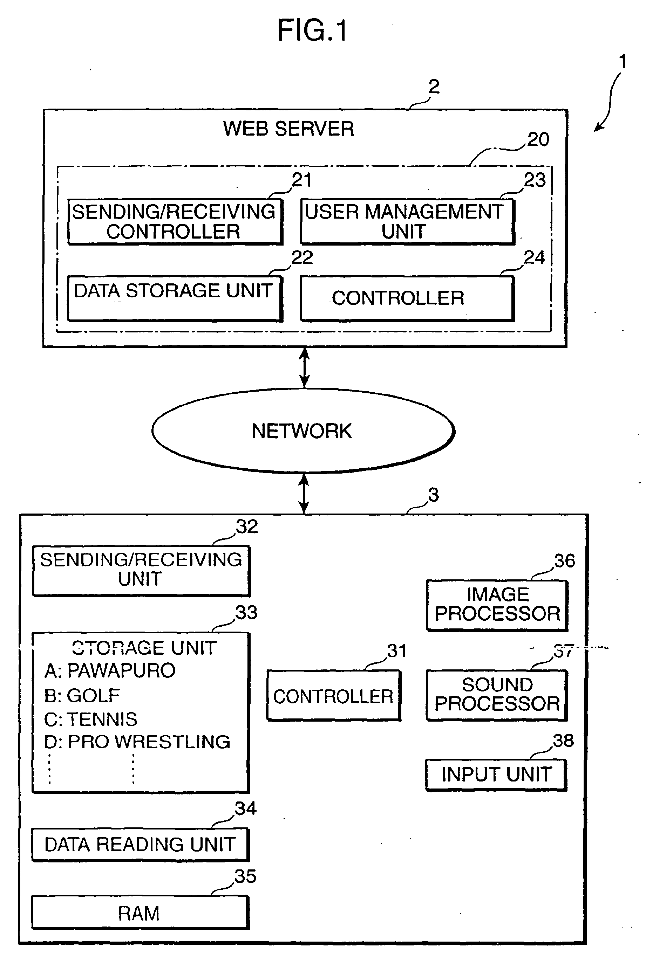

Embodiments of the present invention will now be described below with reference to the drawings. Fig. 1 is an overall construction diagram of the data delivery system for family game machine pertaining to the present invention. The data delivery system 1 includes a data delivery server 2 that stores various types of game character-related information (described below) and can be connected to the family game machine 3 via a network. When the server 2 receives over the network from a family game machine 3 a request for delivery of game character-related information, it delivers the game character-related information to the family game machine 3.

The data delivery server 2 will now be described. The server 2 is a server (such as a server administered by an Internet service provider that has a contract with the business that operates this system) connected to the Internet, and includes a database 20. This database 20 has at least a sending/receiving controller 21, a data-storage-unit 22, and a user management unit 23 and a controller 24.

The sending/receiving controller 21 performs necessary processing when a data delivery request is received from the family game machine 3 and when game character-related information is sent to the family game machine 3. The data storage unit 22 stores various types of game character-related information and game software data that is delivered to users. As described here, game character-related information consists of information that is incorporated into each player character during game action, such as in the case of a professional baseball game, the player's batting average or earned-run average, which fluctuate based on the daily game results for the corresponding real professional baseball player, and this information is updated on a daily basis. The user management unit 23 manages such things as user ID numbers (described below) and access times. The controller 24 determines such things as whether or not game character-related information is authorized for delivery, based on the validity, etc. of the ID number sent by the user, and performs overall control of the database 20.

The family game machine 3 will now be described. The family game machine 3 has a controller 31 that controls the overall operation of the game machine, a sending/receiving unit (such as a modem) 32 that performs various types of processing necessary for the sending and receiving of data to and from the server 2, and a storage unit 33 that stores various kinds of data. The storage unit 33 is constructed such that it can store in a prescribed directory such things as data such as game character-related information received from the server 2, or a communication program that is necessary for the sending and receiving of data to and from the server 2 and is read out from a key disk (a readable recording medium such as a CD) described below. The game character-related information received from the server 2 is read out by the controller 31 from the storage unit 33 when necessary, and is reflected in the action of the corresponding game. It is preferred that the storage unit 33 have a capacity on the order of 10 gigabytes such that multiple types of game software can be installed therein, and such that a game can be booted and run using the game software data stored in the storage unit (as opposed to running the game software from the CD). It is also acceptable if the game software is read from the CD when the game is run.

The family game machine 3 furthermore has a data reading unit 34 that can read data from a CD that stores game software, a key disk that stores such information as a program used in the delivery or receipt of data, or other media, a RAM 35 that temporarily stores program data read from the storage unit 33 or a CD when a game is running, a screen processor 36 that performs image processing when a game is running, a sound processor 37 that performs sound processing when a game is running, and an input unit 38 that inputs instruction information that is needed to run the game.

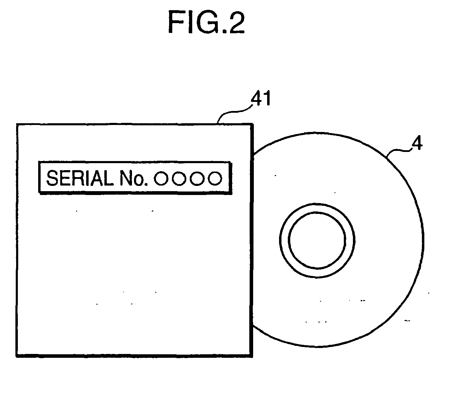

The key disk used in this data delivery system will now be described. Fig. 2 is a drawing showing the key disk and the package in which the key disk is contained. Data necessary for communication to enable the family game machine 3 to receive deliveries of prescribed data from the server 2, such as a communication program, is stored on the readable recording medium (hereinafter the 'key disk') 4 comprising a CD or other medium, and an ID number (such as a serial number) unique to the key disk is affixed to the package. This key disk 4 is purchased by the user from a business that provides data delivery using the server 2. The protection incorporated in the communication program stored on the key disk 4 is deleted when the user inputs into the family game machine 3 the ID number using the input unit 38, enabling the communication program to be installed on the family game machine 3. This ID number is sent as unique user information when the user connects to the server 2 from the family game machine 3, and the server 2 determines based on the received ID number whether or not the user is authorized to receive a data delivery. In addition, a user wishing to obtain a new ID number must obtain a separate key disk.

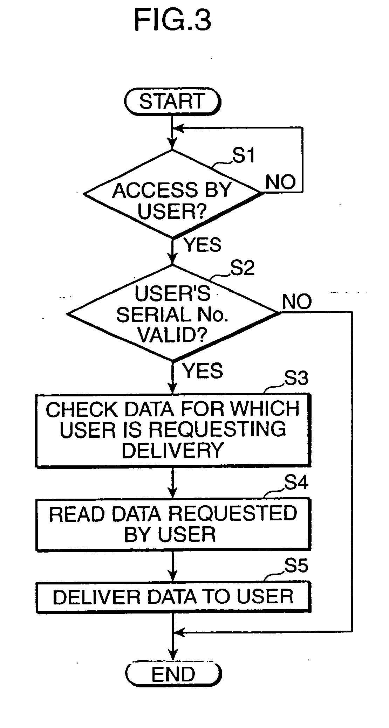

The data delivery carried out in this data delivery system will now be described. Fig. 3 is a flow chart showing the routine executed when this data delivery occurs. When the user's family game machine 3 accesses the server 2 (YES in S1), the controller 24 determines whether or not ID number (serial number) sent from the family game machine 3 is a valid number for the key disk 4 (S2). If the ID number is invalid (NO in S2), delivery of the game character-related information is denied and the routine ends. If the ID number is valid (YES in S2), the game character-related information or the type of game software regarding which delivery is requested by the user is verified (S3). The game character-related information or the game software data is then read out from the storage unit 22 (S4) and sent to the family game machine 3 (S5). Therefore, for such data delivery, it can be determined whether data delivery is authorized for that user without the need to ask the user to input a PIN number or credit card number.

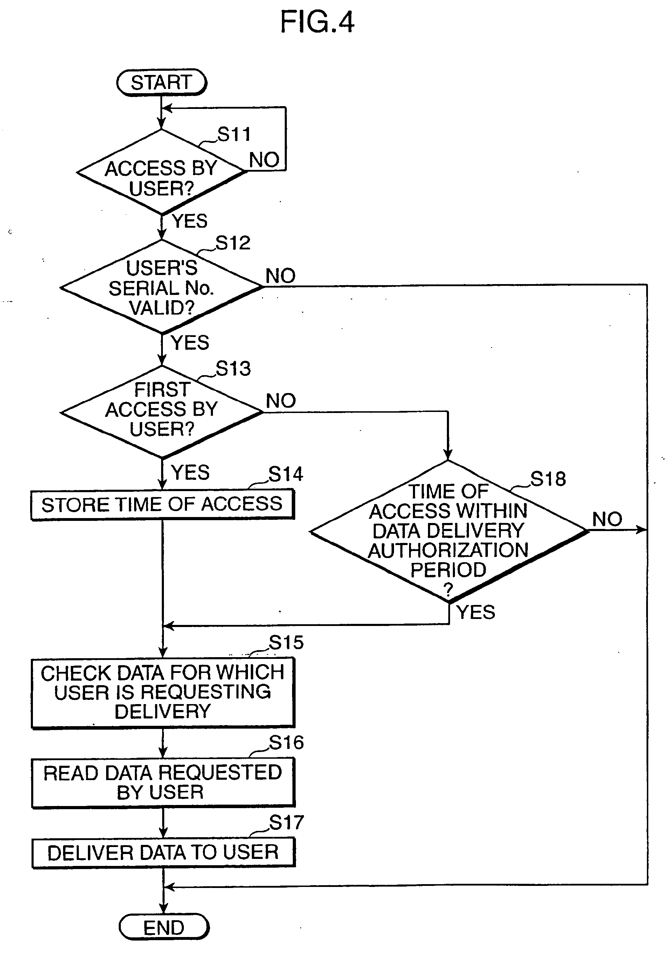

A second embodiment of the data delivery carried out in this data delivery system will now be described. Fig. 4 is a flow chart showing the routine executed when this data delivery is performed. When the user's family game machine 3 accesses the server 2, it is determined whether or not the ID number (serial number) sent from the family game machine 3 is a valid number, as in the first embodiment (S11-S12). If the ID number is valid (YES in S12), it is determined whether or not it is the first access using that ID number (S13). If that access is the first access (YES in S13), the time of access is stored in the user management unit 23 (S14), whereupon the game character-related information or the game software data is read out from the data storage unit 22 and sent to the user (S15-S17). Here, the time of access may consist of either the date or the time of day.

If the access is not the first access for that ID number (NO in S13), the time of first access stored in the user management unit 23 is checked, and it is determined whether or not the current time of access is within the period during which data delivery is authorized (for example, one year from the time of first access) (S18). If the current time of access falls within the period during which data delivery is authorized, game character-related information is sent to the user (S15-S17), whereas if the period during which data delivery is authorized has already elapsed (NO in S18), delivery of game character-related information is denied and the routine ends.

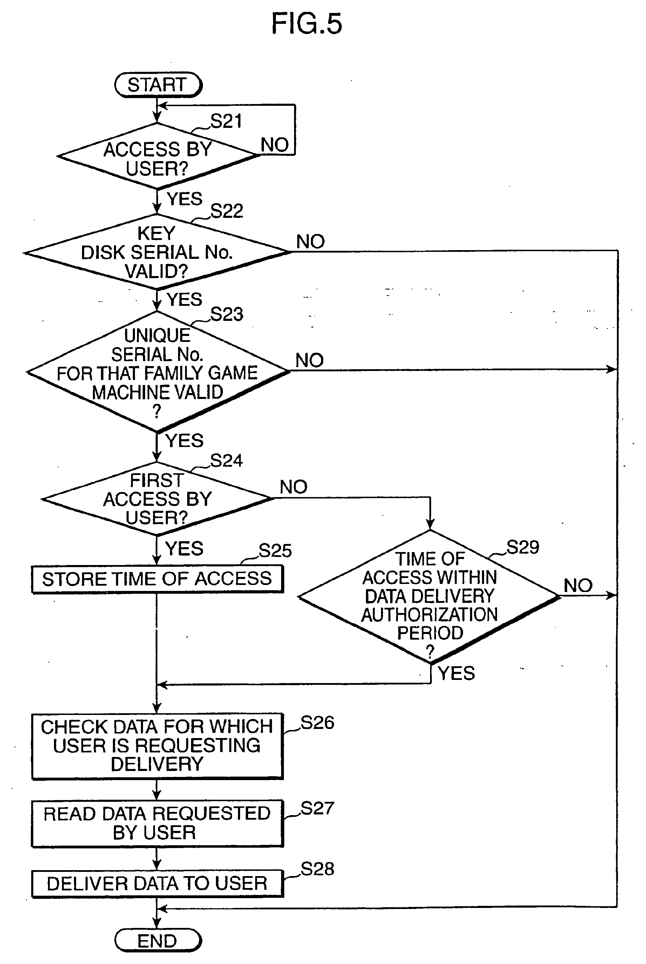

A third embodiment of the data delivery carried out in this data delivery system will now be described. Fig. 5 is a flow chart showing the routine executed when this data delivery is performed. In this embodiment, when the user's family game machine 3 accesses the server 2, it is determined whether or not the key disk's unique ID number (serial number) sent from the family game machine 3 is a valid number, as in the first and second embodiments (S21-S22), and it is furthermore determined whether or not the family game machine's unique ID number (serial number) sent from the family game machine 3 is a valid number (S23). This family game machine unique ID number is incorporated beforehand into the family game machine 3, for example, and is sent to the server 2 by the communication program together with the key disk unique ID number. Where both of these ID numbers are valid (YES in S23), data delivery is authorized only if the current time of access falls within the period during which data delivery is authorized (S24 through S29).

The family game machine 3 stores the received game character-related information in a prescribed directory (such as a directory specified by the server 2) of the storage unit 3. If, in the case of a professional baseball game, for example, player information that fluctuates in accordance with the daily results of real professional baseball games, such as each player's batting average or injury status or a pitcher's earned-run average, can be delivered as game character-related information in this fashion, data regarding the abilities of real players can be reflected in the baseball game on a real-time basis.

Furthermore, according to the data delivery system described above, the user can receive a delivery of game character-related information or game software data by obtaining a valid ID number through the purchase of a key disk 4, the party performing data delivery can deliver game character-related information that is updated on a daily basis in real time, and the user can be reliably charged through the sale of the key disk 4.

In addition, because the use of the key disk 4 can be restricted to use with a single family game machine where it is determined based on the key disk unique ID number and the family game machine unique ID number whether or not data delivery is authorized, and data delivery can be denied where the same readable recording medium is used with a different family game machine, the improper use of a key disk 4 with multiple family game machines can be prevented.

The present invention is not limited to the above embodiments, and can be modified in various ways. For example, in the above embodiments, when the server 2 is accessed from the family game machine 3, data delivery is authorized only within a prescribed period of time after the first access, but it is also acceptable if, for example, a limitation on the number of accesses is imposed, or if delivery is denied once a prescribed amount of data has been delivered. Moreover, in addition to the above game character-related information or game software, the data delivered by the server 2 may also consist of additional data to eliminate problems with the game software in the event such problems occur (so-called bug-fixing software).

Furthermore, in the above embodiments, the input of the key disk unique ID number into the family game machine 3 is carried out manually, but it is also acceptable if the ID number is stored in the key disk 4 and read into the family game machine 3 together with the communication program when the key disk 4 is loaded into the family game machine 3. Moreover, while data delivery from the server 2 to the family game machine 3 is carried out via the Internet in the above embodiments, the network used in the present invention is not limited thereto, and a different network can be used.

According to the present invention, because game character-related information or other data can be easily supplied to the user over a network even if a readable recording medium or other medium that stores the game software or other data is not distributed to the user, new game character-related information or other data can be quickly provided to the family game machine.

Furthermore, if the data delivery authorization determination carried out by the delivery authorization determination means is performed based on the ID number received from the family game machine, and the ID number consists of an ID number unique to a readable recording medium that stores data necessary for communication between the family game machine and the server, the ID number unique to the readable recording medium must be obtained in order for the family game machine to receive a data delivery from the server, and the user must have physical possession of the readable recording medium, and consequently the server can accurately identify a user for whom data delivery is authorized based on the user's ID number, and the party delivering the data on the server side can ensure that the user is charged for the data delivery based on the sale of the readable recording medium.

If the determination regarding whether or not data delivery is authorized is performed based on both an ID number that is unique to the readable recording medium and an ID number that is unique to the family game machine, the use of the readable recording medium can be restricted to use with a single family game machine for the data delivery, and the data delivery can be denied when the same readable recording medium has been used with a different family game machine. As a result, the improper use of the same readable recording medium with multiple family game machines can be prevented, and the party performing the data delivery on the server side can further ensure that the user is charged for the data delivery through the sale of the readable recording medium.

If the data delivered by the server consists of information pertaining to game characters appearing in the game, particularly information pertaining to actual game results of real athletes who appear as game characters in the game, information pertaining to real athletes that is updated on a daily basis can be delivered to the family game machine in real time, and can be quickly reflected in the action of the game played on the family game machine.

If data delivery is authorized only within a prescribed period of time after the first access by the family game machine, because a user that wants to receive a data delivery after the expiration of this prescribed period must, for example, obtain a new ID number through the purchase of another readable recording medium, the user can be reliably charged.

In summary, the present invention relates to a data delivery system that comprises a server having (a) storage means for storing various types of data and delivers prescribed data to a family game machine over a network; (b) delivery authorization determination means that, when a request for data delivery is received from said family game machine, determines whether or not the family game machine is authorized to receive data delivery; and (c) data delivery means that delivers data to the family game machine based on an instruction from the delivery authorization determination means.

With the above features, because the person carrying out data delivery on the server side can identify users for whom data delivery is authorized and data such as information related to the game characters can be easily provided to the users, new information regarding game characters or other information can be quickly provided to the family game machine.

In the invention described in the above, the determination performed by the delivery authorization determination means regarding whether or not data delivery is authorized is preferably performed based on an ID number received from the family game machine, and this ID number is an ID number unique to the readable recording medium that stores data necessary for communication between said family game machine and the server.

With the above feature, because in order for the family game machine to receive a data delivery from the server, the ID number unique to the readable recording medium must be obtained and the user must physically possess the readable recording medium, the server can accurately identify the user as a user for whom data delivery is authorized and the person performing data delivery on the server side can reliably charge the user for the data delivery through the sale of the readable recording medium.

In addition, the determination performed by said delivery authorization determination means regarding whether or not data delivery is authorized is preferably performed based on both an ID number that is unique to the readable recording medium and an ID number that is unique to the family game machine, which are received from the family game machine.

With the above feature, because the determination regarding whether or not data delivery is authorized is performed based on both an ID number that is unique to the readable recording medium and an ID number that is unique to the family game machine, data delivery can be restricted to situations in which the readable recording medium is used with only one family game machine, and data delivery can be refused in situations in which the same readable recording medium has been used with a different family game machine.

In the above described invention, the data delivered from the server can be information pertaining to game characters appearing in the game. With this feature, newly updated information pertaining to the game characters appearing in a game can be reflected quickly into the action of the game that is played on the family game machine.

Furthermore, the game described in the above can be a match-style game, the game characters appearing therein are simulations of real athletes, and the data delivered from the server pertains to game results for these real athletes. With this feature information regarding real players that is updated daily can be delivered to the family game machine in real time and can be quickly reflected in the game action occurring in the family game machine.

Moreover, when a data delivery request is received from the family game machine, the delivery authorization determination means of the server can store the date and time of the initial access and authorize data delivery for only a prescribed period of time. With this feature, because a user wishing to receive data delivery after the expiration of a prescribed period of time must obtain a new ID number by buying another readable recording medium, the user can be reliably charged.

Another form of the present invention relates to a data delivery method that delivers data from a server that stores various types of data to a family game machine connected via a network, wherein the method comprises the steps of receiving a data delivery request from a family game machine; determining whether or not said family game machine is authorized to receive data delivery; and delivering the data to said family game machine if the family game machine is authorized to receive the data delivery.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

## Claims

1. A data delivery system (1) for family game machine (3) comprising:
a server (2) including:
storage means (22) for storing various types of data and transmits prescribed data from the server (2) to a family game machine (3) via a network;
delivery authorization determination means for determining whether or not the family game machine (3) is authorized to receive data delivery when a request for data delivery is received from said family game machine (3), wherein the determination performed by said delivery authorization determination means regarding whether or not data delivery is authorized is performed based on an ID number received from said family game machine (3)and an ID number unique to the family game machine (3) also received from said family game machine (3); and
data delivery means for transmitting data to said family game machine (3) based on an instruction from the delivery authorization determination means,
**characterized in that**
said ID number received from said family game machine (3) is an ID number unique to a readable recording medium that stores data necessary for communication between said family game machine (3) and said server (2), and **in that** the data delivered from said server (2) is information pertaining to game characters appearing in a game.

2. The data delivery system (1) according to claim 1, wherein the data storage unit (33) stores information relating to a performance of each player character which fluctuates based on daily game results for the corresponding real player.

3. The data delivery system (1) according to claim 2, wherein said information stored in the data storage unit (33) is updated on a daily basis according to daily game result.

4. The data delivery system (1) according to any of claims 1 through 3, wherein said game is a match-style game, the game characters appearing therein are simulations of real athletes and the data delivered from said server (2) pertains to game results for these real athletes.

5. The data delivery system (1) according to any of claims 1 through 4, wherein when a data delivery request is received from said family game machine (3), said delivery authorization determination means of the server (2) stores the data and time of the first access and authorizes data delivery for only a prescribed period of time.

6. A data delivery method that delivers data from a server (2) that stores various types of data to a family game machine (3) connected thereto via a network, the method comprising the steps of:
receiving a data delivery request from a family game machine (3);
determining whether or not said family game machine (3) is authorized to receive data delivery on the basis of both an ID number received from said family game machine (3), , and an ID number unique to the family game machine (3) also received from said family game machine (3,
**characterized in that** said ID number is an ID number unique to a readable recording medium that stores data necessary for communication between said family game machine (3) and said server (2)); and in
delivering character related data to said family game machine (3) if the family game machine (3) is authorized to receive the data delivery.

## Patentansprüche

1. Datenbereitstellungssystem (1) für ein Unterhaltungsspielgerät (3), umfassend:
einen Server (2), beinhaltend:
Speichermittel (22) zum Speichern von verschiedenen Typen von Daten und Übertragen von vorgeschriebenen Daten von dem Server (2) an ein Unterhaltungsspielgerät (3) über ein Netzwerk;
Bereitstellungsautorisierungsbestimmungsmittel zum Bestimmen, ob das Unterhaltungsspielgerät (3) zum Empfangen einer Datenbereitstellung autorisiert ist, wenn eine von dem Unterhaltungsspielgerät (3) stammende Anforderung einer Datenbereitstellung empfangen worden ist, wobei die von dem Bereitstellungsautorisierungsbestimmungsmittel vorgenommene Bestimmung dahingehend, ob die Datenbereitstellung autorisiert ist, auf Basis einer Kennnummer, die von dem Unterhaltungsspielgerät (3) stammend empfangen worden ist, und einer Kennnummer, die für das Unterhaltungsspielgerät (3) eindeutig ist und ebenfalls von dem Unterhaltungsspielgerät (3) stammend empfangen worden ist, vorgenommen wird; und
Datenbereitstellungsmittel zum Übertragen von Daten an das Unterhaltungsspielgerät (3) auf Basis einer von dem Bereitstellungsautorisierungsbestimmungsmittel stammenden Anweisung,
**dadurch gekennzeichnet,**
**dass** die von dem Unterhaltungsspielgerät (3) stammende empfangene Kennnummer eine Kennnummer ist, die für ein lesbares Aufzeichnungsmedium eindeutig ist, das für eine Kommunikation zwischen dem Unterhaltungsspielgerät (3) und dem Server (2) notwendige Daten speichert, und
**dass** die von dem Server (2) bereitgestellten Daten Informationen sind, die in einem Spiel auftretende Spielcharaktere betreffen.

2. Datenbereitstellungssystem (1) nach Anspruch 1, wobei die Datenspeichereinheit (33) Informationen im Zusammenhang mit dem jedem Spielcharakter zu eigenen Verhalten speichert, das auf Basis von Tagesspielergebnissen für den entsprechenden echten Spieler schwankt.

3. Datenbereitstellungssystem (1) nach Anspruch 2, wobei die in der Datenspeichereinheit (33) gespeicherten Informationen auf Tagesbasis entsprechend einem Tagesspielergebnis aktualisiert werden.

4. Datenbereitstellungssystem (1) nach einem der Ansprüche 1 bis 3, wobei das Spiel ein wettkampfartiges Spiel ist, die darin auftretenden Spielcharaktere Simulationen von echten Sportlern sind und die von dem Server (2) bereitgestellten Daten Spielergebnisse für diese echten Sportler betreffen.

5. Datenbereitstellungssystem (1) nach einem der Ansprüche 1 bis 4, wobei dann, wenn eine von dem Unterhaltungsspielgerät (3) stammende Datenbereitstellungsanforderung empfangen worden ist, das Bereitstellungsautorisierungsbestimmungsmittel des Servers (2) die Daten und die Zeit des ersten Zugriffes speichert und eine Datenbereitstellung nur für eine vorgeschriebene Zeitspanne autorisiert.

6. Datenbereitstellungsverfahren zum Bereitstellen von Daten von einem verschiedene Typen von Daten speichernden Server (2) für ein mit diesem über ein Netzwerk verbundenes Unterhaltungsspielgerät (3), wobei das Verfahren die nachfolgenden Schritte umfasst:
Empfangen einer von einem Unterhaltungsspielgerät (3) stammenden Datenbereitstellungsanforderung;
Bestimmen, ob das Unterhaltungsspielgerät (3) zum Empfangen einer Datenbereitstellung autorisiert ist, auf Basis sowohl einer von dem Unterhaltungsspielgerät (3) stammenden empfangenen Kennnummer wie auch einer für das Unterhaltungsspielgerät (3) eindeutigen und ebenfalls von dem Unterhaltungsspielgerät (3) stammenden empfangenen Kennnummer,
**dadurch gekennzeichnet,**
**dass** die Kennnummer eine Kennnummer ist, die für ein lesbares Aufzeichnungsmedium eindeutig ist, das für eine Kommunikation zwischen dem Unterhaltungsspielgerät (3) und dem Server (2) notwendige Daten speichert; und
**dass** Daten im Zusammenhang mit Charakteren für das Unterhaltungsspielgerät (3) bereitgestellt werden, wenn das Unterhaltungsspielgerät (3) zum Empfangen der Datenbereitstellung autorisiert ist.

## Revendications

1. Système de mise à disposition des données (1) pour une machine de jeu de famille (3) comprenant :
un serveur (2) incluant :
un moyen de mémorisation (22) pour mémoriser différents types de données et de données de transmission prescrites depuis le serveur (2) vers une machine de jeu de famille (3) par l'intermédiaire d'un réseau ;
un moyen de détermination d'autorisation de mise à disposition afin de déterminer si, oui ou non, la machine de jeu de famille (3) est autorisée à recevoir la mise à disposition des données lorsqu'une demande de mise à disposition des données est reçue depuis ladite machine de jeu de famille (3), dans lequel la détermination accomplie par ledit moyen de détermination d'autorisation de mise à disposition, en ce qui concerne si la mise à disposition des données est autorisée ou non, est accomplie sur la base d'un numéro d'identification (ID) reçu depuis ladite machine de jeu de famille (3) et d'un numéro d'identification (ID) unique à la machine de jeu de famille (3), c'est-à-dire reçu par ladite machine de jeu de famille (3) ; et
un moyen de mise à disposition des données pour transmettre des données à ladite machine de jeu de famille (3) sur la base d'une instruction provenant du moyen de détermination d'autorisation de mise à disposition,
**caractérisé en ce que**
ledit numéro d'identification (ID) reçu depuis ladite machine de jeu de famille (3) est un numéro d'identification (ID) unique à un support d'enregistrement lisible qui mémorise les données nécessaires à la communication entre ladite machine de jeu de famille (3) et ledit serveur (2), et **en ce que** les données mises à disposition depuis ledit serveur (2) sont des informations qui appartiennent aux personnages de jeu qui apparaissent dans un jeu.

2. Système de mise à disposition des données (1) conformément à la revendication 1, dans lequel l'unité de mémorisation des données (33) mémorise une information relative à une performance de chaque personnage qui joue, laquelle fluctue sur la base des résultats de jeu quotidiens pour le joueur réel correspondant.

3. Système de mise à disposition des données (1) conformément à la revendication 2, dans lequel ladite information mémorisée dans l'unité de mémorisation des données (33) est mise à jour sur une base quotidienne conformément à un résultat de jeu quotidien.

4. Système de mise à disposition des données (1) conformément à l'une quelconque des revendications 1 à 3, dans lequel ledit jeu est un jeu du type « match », dans lequel les personnages de jeu qui apparaissent dedans sont des simulations de véritables athlètes et dans lequel les données mises à disposition depuis le serveur (2) appartiennent aux résultats de jeu pour ces véritables athlètes.

5. Système de mise à disposition des données (1) conformément à l'une quelconque des revendications 1 à 4, dans lequel, lorsqu'une demande de mise à disposition des données est reçue depuis ladite machine de jeu de famille (3), ledit moyen de détermination d'autorisation de mise à disposition du serveur (2) mémorise les données et le moment du premier accès et autorise la mise à disposition des données seulement pendant une période de temps prescrite.

6. Procédé de mise à disposition des données qui met à disposition des données depuis un serveur (2) qui mémorise différents types de données vers une machine de jeu de famille (3) connectée à celui-ci par l'intermédiaire d'un réseau, le procédé comprenant les étapes suivantes :
la réception d'une demande de mise à disposition des données depuis une machine de jeu de famille (3) ;
la détermination si, oui ou non, la machine de jeu de famille (3) est autorisée à recevoir la mise à disposition des données sur la base à la fois d'un numéro d'identification (ID) reçu depuis ladite machine de jeu de famille (3) et d'un numéro d'identification (ID) unique à la machine de jeu de famille (3), c'est-à-dire reçu par ladite machine de jeu de famille (3) ;
**caractérisé en ce que** ledit numéro d'identification (ID) est un numéro d'identification (ID) unique à un support d'enregistrement lisible qui mémorise les données nécessaires à la communication entre ladite machine de jeu de famille (3) et ledit serveur (2) ; et **en ce que**
la mise à disposition des données concernant les personnages vers ladite machine de jeu de famille (3) si la machine de jeu de famille (3) est autorisée à recevoir la mise à disposition des données.
